Europäisches Patentamt

European Patent Office

Office européen des brevets

(19)

(11) Veröffentlichungsnummer: **0 282 886 B1**

(12) # EUROPÄISCHE PATENTSCHRIFT

(45) Veröffentlichungstag der Patentschrift: **19.11.92**

(51) Int. Cl.⁵: **F24D 19/10**

(21) Anmeldenummer: **88103684.2**

(22) Anmeldetag: **09.03.88**

(54) **Verfahren zum Steuern der Vorlauftemperatur einer Anlage zur Übertragung von Wärmeenergie.**

(30) Priorität: **19.03.87 DE 3709085**

(43) Veröffentlichungstag der Anmeldung:
**21.09.88 Patentblatt 88/38**

(45) Bekanntmachung des Hinweises auf die
Patenterteilung:
**19.11.92 Patentblatt 92/47**

(84) Benannte Vertragsstaaten:
**AT BE CH DE FR GB IT LI NL SE**

(56) Entgegenhaltungen:
**EP-A- 0 195 255**
**DE-A- 2 811 153**
**US-A- 4 497 438**

(73) Patentinhaber: **Bähr, Thomas**
**Hirtenweg 11a**
**W-3000 Hannover 1(DE)**

(72) Erfinder: **Bähr, Thomas**
**Hirtenweg 11a**
**W-3000 Hannover 1(DE)**

(74) Vertreter: **Arendt, Helmut, Dipl.-Ing.**
**Patentanwalt Bergiusstrasse 2 c**
**W-3000 Hannover 51(DE)**

EP 0 282 886 B1

Rank Xerox (UK) Business Services

## Beschreibung

Die Erfindung betrifft ein Verfahren zum Steuern der Vorlauftemperatur des Arbeitsmittels einer Anlage zur Wärmeenergieübertragung, insbesondere zur Temperierung der Luft in einem geschlossenen Raum.

Allgemein bekannt ist ein Verfahren, bei welchem die Vorlauftemperatur einer Heizungsanlage nach Maßgabe der Außentemperatur gesteuert wird. Damit wird die Absicht verfolgt, die Heizleistung der Anlage dem ständig sich ändernden Gefälle zwischen Raumtemperatur und Außentemperatur anzupassen. Dieses Verfahren ist jedoch nicht in der Lage, das Wärmespeicherungsvermögen des Gebäudemauerwerks zu berücksichtigen. Dieser Mangel kann dazu führen, daß im Falle eines Wettersturzes nach einer längeren Wärmeperiode die Anlage schnell auf eine erhöhte Heizleistung gebracht wird, obwohl es die im Mauerwerk gespeicherte Wärme erlauben würde, zunächst ganz oder zumindest teilweise auf Heizenergie zu verzichten. Andererseits führt ein rascher Temperaturanstieg nach einer längeren Kälteperiode zu einer ebenso schnellen Zurücknahme der Heizleistung, obwohl das Mauerwerk noch stark ausgekühlt ist und sich in der Regel deutlich langsamer erwärmt als die Außenluft. Es sind zwar Außentemperaturfühler bekanntgeworden, welche in das Mauerwerk eingelassen werden, diese Fühler erfassen jedoch lediglich die Mauerwerkstemperatur in ihrer unmittelbaren Umgebung. Dadurch ist die Aussagekraft ihrer Messungen für den gesamten Gebäudekomplex zweifelhaft.

Darüberhinaus ist eine solche Anlage selbstverständlich überfordert, wenn sie auch noch die inneren Lasten eines Gebäudekomplexes berücksichtigen soll. Um den möglicherweise zusätzlichen Verlust oder- Zugewinn von Wärmeenergie durch nichtheiztechnische Installationen auszugleichen, müssen in diesem Fall zusätzliche Steuerungs- oder Regelgeräte verwendet werden. Zwar ist der EP-A 0 195 255 zu entnehmen, daß aus der gemessenen Differenz der Vorlauf- und der Rücklauftemperatur multipliziert mit dem gemessenen Umwälzmengenstrom der im Arbeitsmittelkreis verbrauchte Energiemengenstrom ermittelt wird. Ein weitergehender Vorschlag, die Speicherkapazität des Mauerwerks und/oder die Wärmeenergie nichtheiztechnischer Installationen wirkungsvoll bei der Ermittlung der Vorlauftemperaturen in einfacher Weise zu berücksichtigen, ist nicht erkennbar.

Der Erfindung liegt die Aufgabe zu Grunde, ein Verfahren zum Steuern der Vorlauftemperatur anzugeben, welches Nebeneinflüsse, beispielsweise im Mauerwerk gespeicherte Wärme sowie innere Lasten für die Steuerung des Energiebedarfs eines Raumes berücksichtigt.

Die Lösung besteht darin, daß ein dem ermittelten Energiemengenstrom entsprechendes Laststufenfeld (L') einem flächengleichen Laststufenfeld (L) innerhalb eines anlagenspezifischen , dreidimensionalen Kennlinienblocks (K) zugeordnet ist und von diesem die gesuchte Vorlauftemperatur abgenommen wird, wobei die Dimensionen des dreidimensionalen Kennlinienblocks (K) durch a) die Vorlauftemperatur und die Rücklauftemperatur, b) den Umwälzmengenstrom des Arbeitsmittels der Anlage und c) die Außentemperatur festgelegt sind.

Bekanntlich ergibt sich eine Laststufe im Heizbetrieb einer Anlage aus dem jeweiligen Gefälle zwischen Raumtemperatur und Aussentemperatur. Jeder Laststufe ist laut Heizkurven-Diagramm eine bestimmte Vorlauftemperatur zugeordnet. Aus der Differenz zwischen Vorlauf- und Rücklauftemperatur sowie dem Umwälzmengenstrom läßt sich für jede Laststufe der tatsächliche Wärmeverluststrom im Heizkreis errechnen, dem somit ebenfalls eine bestimmte Vorlauftemperatur zugeordnet ist.

Bei dem Verfahren nach der Erfindung wird der tatsächliche Wärmeverluststrom im Heizkreis gemessen und danach jeweils die zugeordnete Vorlauftemperatur bestimmt.

Mit dem Verfahren nach der Erfindung lassen sich beispielsweise die Einflüsse durch das Wärmespeicherungsvermögen des Mauerwerks auf die Steuerung der Vorlauftemperatur und der Heizleistung einer Anlage im vollen Umfang berücksichtigen. Dadurch ergeben sich Einsparungen an Heizenergie und eine Steigerung des Heizkomforts. Außerdem entfällt der bei herkömmlichen Verfahren zur Vorlauftemperatursteuerung unverzichtbare Witterungsfühler einschließlich der Meßwert-Übertragungsleitungen.

An Hand der Figuren der Zeichnung wird nachstehend die Erfindung näher erläutert.

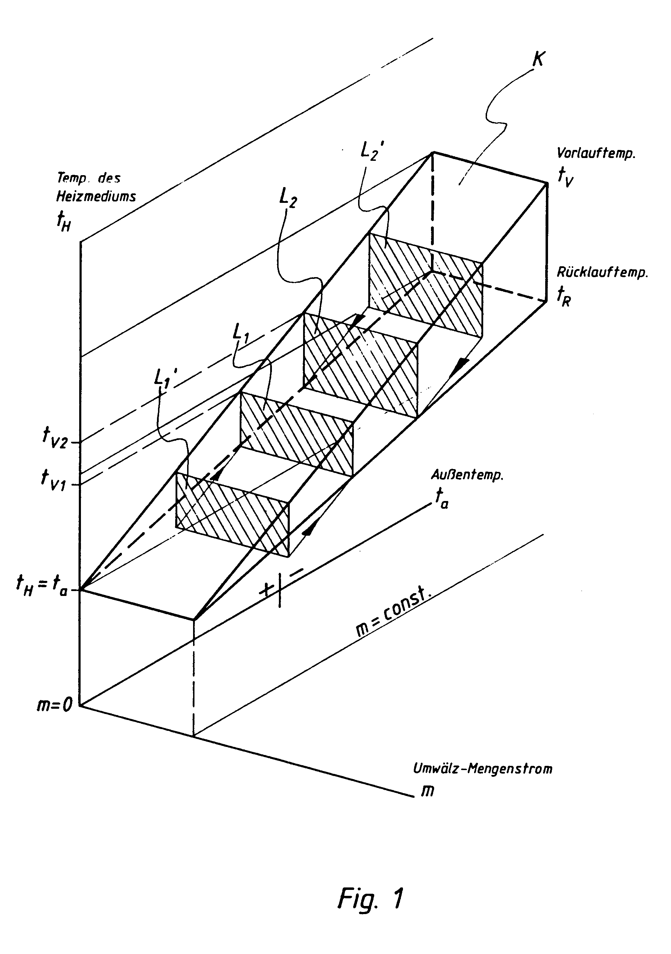

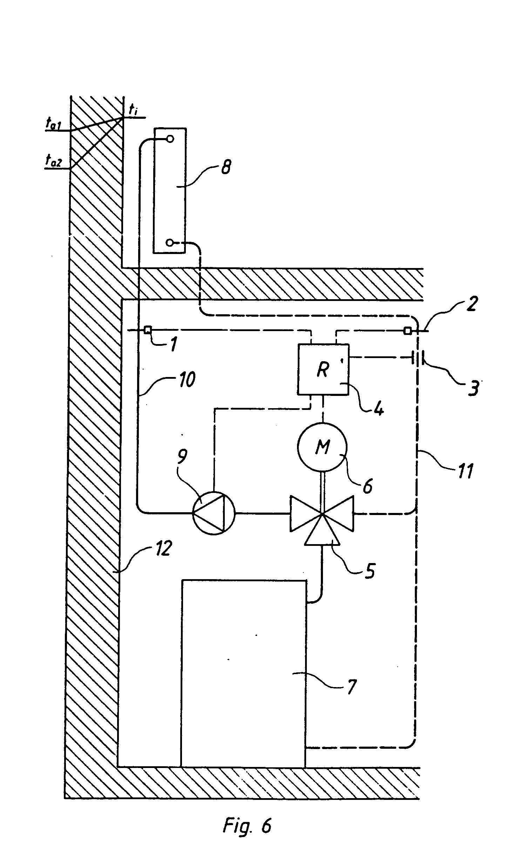

Fig. 1 läßt den Ablauf des Verfahrens in einer Anlage mit gleichbleibendem Umwälzmengenstrom erkennen. In einem dreidimensionalen Koordinatensystem mit den Achswerten für die Temperaturen des Arbeitsmittels $t_H$ und der Außenluft $t_a$ sowie für den Umwälz-Mengenstrom m ist ein anlagenspezifischer Kennlinienblock $K_1$ eingezeichnet. Der Kennlinienblock wird durch die Summe aller Laststufenfelder einer Anlage gebildet. Ein Laststufenfeld ist das Produkt der Differenz zwischen einer Vorlauftemperatur $t_V$ und der dieser zugeordneten Rücklauftemperatur $t_R$ mit dem zugeordneten Umwälz-Mengenstrom m nach der Formel $(t_V - t_R) \times m$. Die in dem Nomogramm als Querschnittsflächen dargestellten, in den dreidimensionalen Kennlinienblock K nicht integrierten Laststufenfelder $L_1'$ bzw. $L_2'$ entsprechen momentan gemessenen Wärmeverlusten. Sie werden innerhalb des Kennlinienblocks durch einen Rechner R (Fig. 6) solange verschoben, bis sie sich mit den flächengleichen, in den Kennlinienblock genau eingepaßten Laststufenfeldern $L_1$ bzw. $L_2$ decken. Die den eingepaßten Laststufenfeldern zugeordneten Vorlauftemperaturen $t_{V1}$ bzw. $t_{V2}$ sind dann die gesuchten Werte.

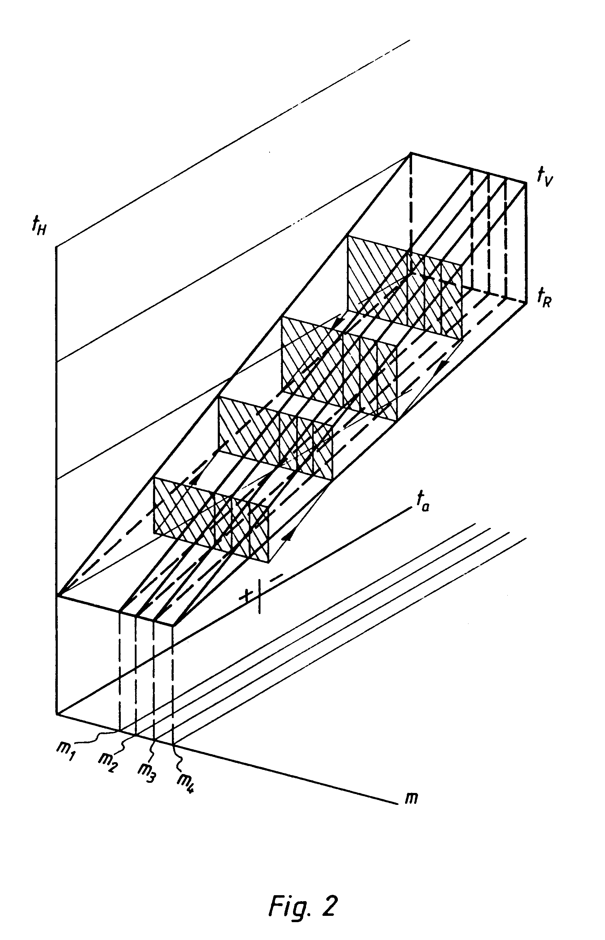

Fig. 2 zeigt den Verfahrensablauf in einer Anlage, in welcher einzelne Anlagenteile abgeschaltet werden und der Umwälzmengenstrom entsprechend reduziert wird. Der Vorgang ist im wesentlichen der gleiche wie in Fig. 1 dargestellt, lediglich die Größe der jeweiligen Laststufenfläche wird um einen Faktor vermindert, welcher der Verminderung des Umwälzmengenstromes, beispielsweise von $m_4$ bis $m_1$, entspricht.

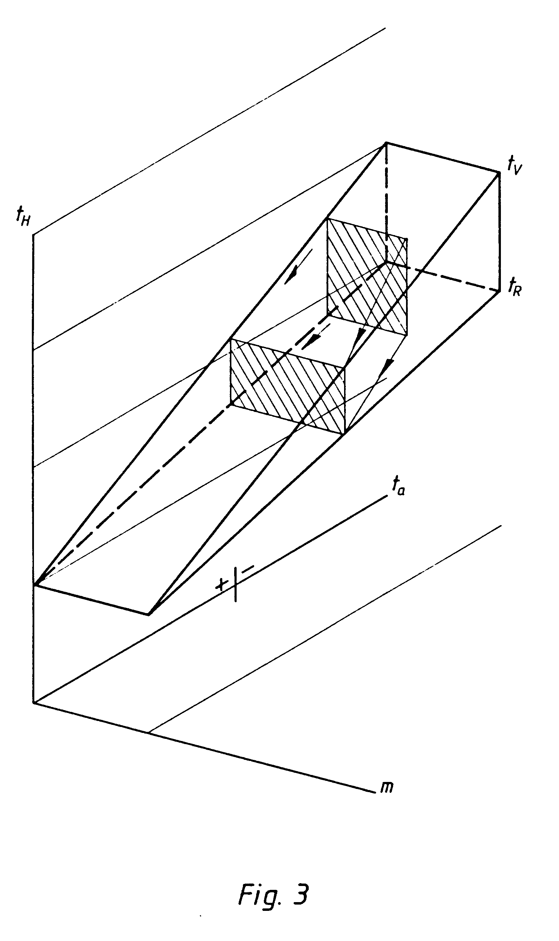

Fig. 3 zeigt prinzipiell den gleichen Vorgang wie in Fig. 1, jedoch unter dem Aspekt eines gedrosselten, aber ungeregelten Umwälzmengenstroms, wie er beispielsweise in Heizungsanlagen mit thermostatischen Heizkörperventilen, bei deren temperaturbedingtem Schließen jedoch bei mit voller Leistung weiterlaufender Umwälzpumpe auftritt. Hier wird ein nicht integriertes Laststufenfeld solange verschoben, bis sein Produkt aus der Differenz zwischen Vorlauf- und Rücklauftemperatur und dem Umwälzmengenstrom gleich ist dem entsprechenden Produkt eines integrierten flächengleichen Laststufenfeldes.

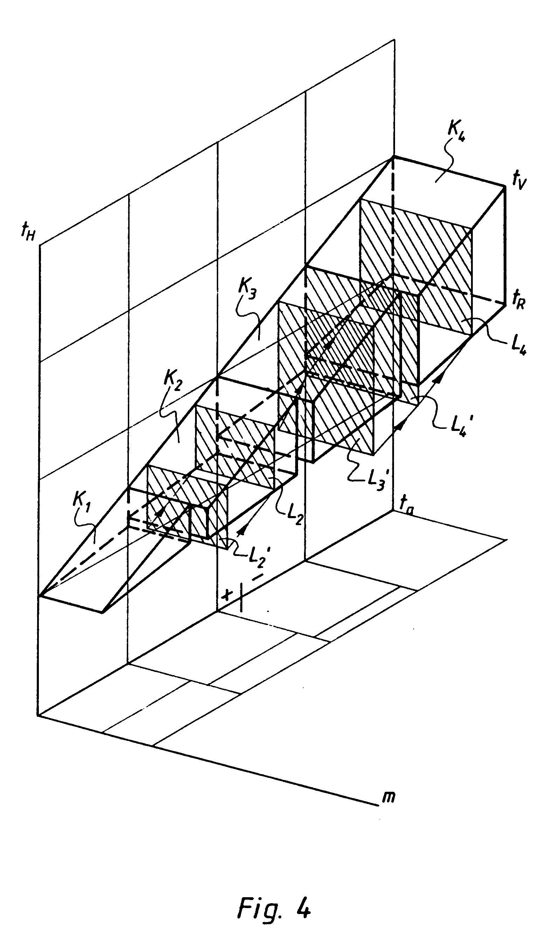

Fig. 4 zeigt die Anwendung des Verfahrens in einer Anlage mit stufenweise geregeltem Umwälzmengenstrom. Der Gesamt-Kennlinienblock zerfällt entsprechend der Anzahl der Mengenstrom-Regelstufen in mehrere Einzelblöcke $K_1$, $K_2$, $K_3$, $K_4$. Innerhalb eines Einzelblocks, z. B. $K_2$, wird ein nicht integriertes Laststufenfeld $L_{2'}$ in gleicher Weise nach $L_2$ verschoben wie in Fig. 1 dargestellt. Muß jedoch die Grenze zwischen zwei Einzelblöcken, z. B von $K_3$ nach $K_4$, übersprungen werden, dann wird das Produkt $(t_V - t_R) \times m$ des Laststufenfeldes $L_3$, zunächst dividiert durch den Wert m des neuen Einzelblocks $K_4$. Das dabei neu entstehende, nicht integrierte Laststufenfeld $L_4$, wird im neuen Einzelblock $K_4$ solange verschoben, bis es sich mit einem integrierten Laststufenfeld $L_4$ deckt.

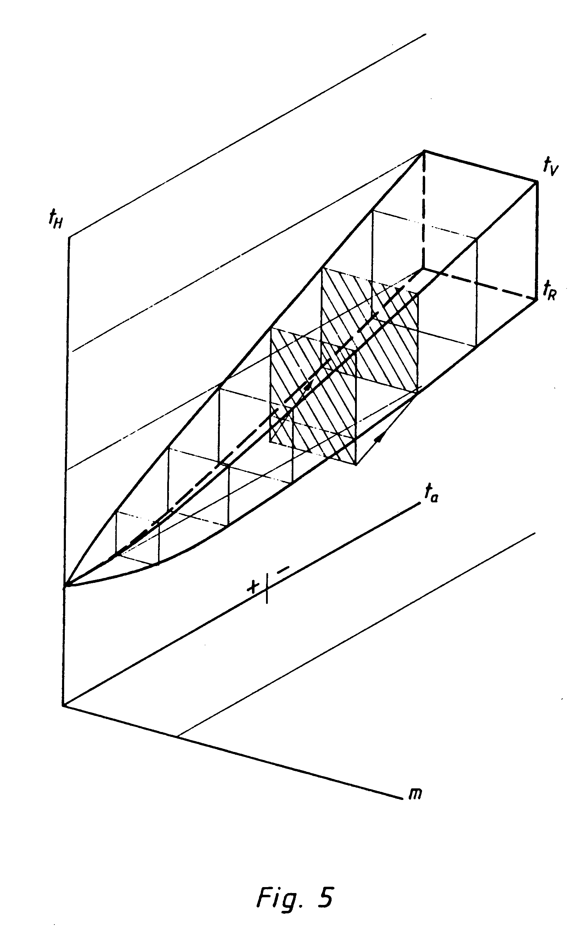

Fig. 5 zeigt eine weitere Variante des gleichen Grundprinzips, jedoch mit stufenlos geregeltem Umwälzmengenstrom. Sie ist gekennzeichnet von einer bestimmten linearen oder nichtlinearen Abnahme der Flächen der einzelnen integrierten Laststufenfelder im Bereich zwischen Vollast und Stillstand der Anlage. Auch hier wird ein nicht integriertes Laststufenfeld innerhalb eines Kennlinienblocks solange verschoben, bis sein Produkt aus der Differenz zwischen Vorlauf- und Rücklauftemperatur und dem Umwälzmengenstrom gleich ist dem Produkt eines flächengleichen, jedoch integrierten Laststufenfeldes.

In Fig. 6 ist das Ausführungsbeispiel einer an sich bekannten Heizungsanlage zur Durchführung des erfindungsgemäßen Verfahrens dargestellt. Im Heizkreis befinden sich der Vorlauftemperaturfühler 1, der Rücklauftemperaturfühler 2 sowie der Mengenstromfühler 3. Sie sind mittels Übertragungsleitungen mit dem Rechner 4 verbunden. Weitere Übertragungsleitungen führen vom Rechner 4 zum motorischen Stellglied 6 des Mischventils 5 sowie zur Umwälzpumpe 9. Die Vorlaufleitung ist mit 10, die Rücklaufleitung von der Heizfläche 8 mit 11 bezeichnet.

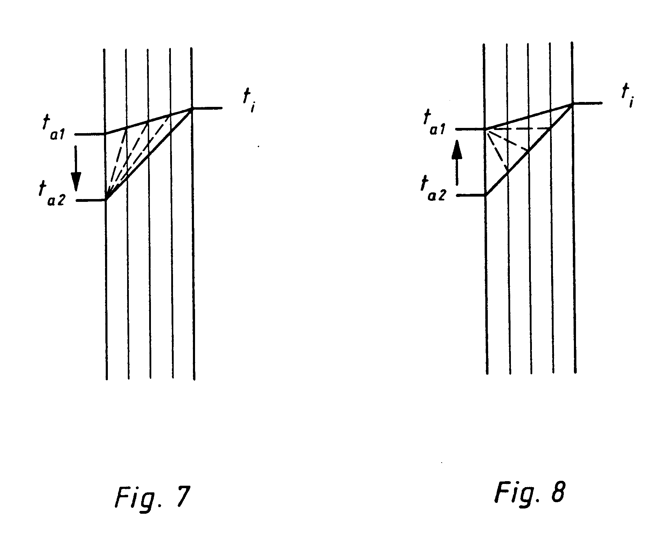

Die Wirkungsweise der Anlage nach Fig. 6 ist folgende: Es sei angenommen, die Heizungsanlage habe sich auf eine Außentemperatur $t_{a1}$ eines milden Wintertages einreguliert. Das Temperaturgefälle von $t_i$ nach $t_{a1}$ ist gering, desgleichen auch die Wärmeabgabe der Heizfläche 8. Das Produkt aus der Differenz zwischen Vorlauf- und Rücklauftemperatur multipliziert mit dem Umwälzmengenstrom entspricht einem integrierten Laststufenfeld innerhalb des Kennlinienblocks der Anlage. Tritt nun ein Temperatursturz ein von $t_{a1}$ nach $t_{a2'}$, dann wird zunächst die im Mauerwerk 12 gespeicherte Wärme schichtweise von außen her aufgezehrt, wie dies in Fig. 7 vereinfacht dargestellt ist. Dies ist ein allmählich fortschreitender Vorgang, bei welchem jedoch die Wärmeabgabe der Heizfläche 8 in gleichem Maße zunimmt, erkennbar am Absinken der Rücklauftemperatur. Die nunmehr eingetretene Laststufe kann der vorgegebenen Vorlauftemperatur nicht mehr zugeordnet werden. Der Rechner 4 errechnet nun an Hand der neuen Meßwerte der Fühler 1, 2 und 3 das neue, größere Laststufenfeld und verschiebt dieses innerhalb des gespeicherten Kennlinienblocks der Anlage soweit in Richtung auf eine höhere Vorlauftemperatur, bis es sich wieder voll integrieren läßt. Der hierbei selbsttätig aufgefundene, dem neuen Laststufenfeld zugeordnete Sollwert für die Vorlauftemperatur wird mit dem vom Fühler 1 gemessenen Istwert verglichen. Bei Abweichung errechnet der Rechner 4 ein Stellsignal, welches das Mischventil 5 über das motorische Stellglied 6 solange verstellt, bis die Vorlauftemperatur dem neuen Sollwert entspricht. Bei Anlagen mit Umwälzmengenregulierung erhält auch die Umwälzpumpe 9 vom Rechner 4 ein Signal zur Leistungsanpassung, die anhand der Meßwerte des Mengenstromfühlers 3 überwacht wird.

Steigt die Außentemperatur wieder an, beispielsweise von $t_{a2}$ nach $t_{a1}$ (Fig. 8), dann benötigt die schichtweise Erwärmung des Mauerwerks ebenfalls eine bestimmte Zeit. In dieser Zeit vermindert sich aber auch allmählich die Wärmeabgabe der Heizflächen 8, erkennbar am entsprechenden Ansteigen der Rücklauftemperatur. Das Laststufenfeld wird kleiner und kann in Richtung auf eine niedrigere Vorlauftemperatur verschoben werden, die sich dann bei der völligen Integration des neuen Laststufenfeldes im Kennlinienblock der Anlage als neuer Sollwert ergibt. Dementsprechend werden dann auch das Mischventil 5 und die Umwälzpumpe 9 gesteuert.

Der Verfahrensablauf ist auch dann prinzipiell der gleiche, wenn sich die Raumtemperatur zusätzlich durch innere Lasten ändert. Ein Absinken der Raumtemperatur, z. B. durch Lüften, vergrößert die Temperaturdifferenz zwischen Vorlauf und Rücklauf und somit auch das Laststufenfeld, welches nun in Richtung auf eine höhere Vorlauftemperatur verschoben wird. Umgekehrt führt eine Erwärmung der Raumluft, z B. durch eine größere Anzahl von Personen oder durch Abwärme von nicht heiztechnischen Einrichtungen zu einer Verringerung der Temperaturspreizung zwischen Vorlauf und Rücklauf und damit zu einer Verschiebung des Laststufenfeldes in Richtung auf eine niedrigere Vorlauftemperatur.

Bei Anlagen, die ohne Mischventil betrieben werden können, steuert der Rechner 4 den Wärmeerzeuger auf direktem Wege. Desweiteren berücksichtigt der Rechner 4 beim Betrieb mit anderen Medien als Wasser deren abweichende spezifische Wärme. Im übrigen ist leicht erkennbar, daß die Erfindung nicht nur für die Raumlufttemperierung, sondern auch für industrielle Wärmeverbraucher, für verfahrenstechnische Zwecke und dergleichen geeignet ist, d. h. für Heizungsanlagen im weitesten Sinne. Auch eine Umkehrung des Verfahrens für Kühl-und Klimaanlagen ist ohne weiteres realisierbar.

**Patentansprüche**

1. Verfahren zum Steuern der Vorlauftemperatur des Arbeitsmittels einer Anlage zur Wärmeenergieübertragung, insbesondere zur Temperierung der Luft in einem geschlossenen Raum, unter Ermittlung des im Arbeitsmittelkreis verbrauchten Energiemengenstroms [($t_v$ - $t_R$) • m], wobei $t_v$ die Vorlauf-, $t_R$ die Rücklauftemperatur und m der gemessene Umwälzmengenstrom sind, dadurch gekennzeichnet, daß ein dem ermittelten Energiemengenstrom entsprechendes Laststufenfeld (L') einem flächengleichen Laststufenfeld (L) innerhalb eines anlagenspezifischen, dreidimensionalen Kennlinienblocks (K) zugeordnet und von diesem die gesuchte Vorlauftemperatur abgenommen wird, wobei die Dimensionen des dreidimensionalen Kennlinienblocks (K) durch a) Vorlauftemperatur und die Rücklauftemperatur b) den Umwälzmengenstrom des Arbeitsmittels der Anlage und c) die Außentemperatur festgelegt sind.

2. Verfahren nach Anspruch 1, dadurch gekennzeichnet, daß aus der Differenz zwischen der Vorlauf- und der Rücklauftemperatur bei gleichbleibendem Umwälzmengenstrom der verbrauchte Energiemengenstrom errechnet und hiernach die diesem zugeordnete Vorlauftemperatur bestimmt wird.

3. Verfahren nach Anspruch 1 oder 2, dadurch gekennzeichnet, daß aus der Differenz zwischen Vorlauf- und Rücklauftemperatur multipliziert mit dem auf einen bestimmten Teilbetrag reduzierten Umwälzmengenstrom der verbrauchte Energiemengenstrom errechnet und hiernach die Vorlauftemperatur bestimmt wird, die dem in den Kennlinienblock eingepaßten Laststufenfeld gleichen Flächeninhalts mit in gleichem Maße reduziertem Umwälzmengenstrom zugeordnet ist.

4. Verfahren nach einem der Ansprüche 1 bis 3, dadurch gekennzeichnet, daß für jede Umwälzmengenstrom-Regelstufe der verbrauchte Energiemengenstrom als Produkt aus der Differenz zwischen Vorlauf- und Rücklauftemperatur multipliziert mit dem Umwälzmengenstrom errechnet und hiernach die zugeordnete Vorlauftemperatur bestimmt und beim Übergang von einer Umwälzmengenstrom-Regelstufe zur anderen das errechnete Produkt durch den Umwälzmengenstrom der nächsten Umwälzmengenstrom-Regelstufe dividiert sowie hiernach die zugeordnete Vorlauftemperatur bestimmt und die neue Umwälzmengenstrom-Regelstufe geschaltet wird.

5. Verfahren nach einem oder mehreren der Ansprüche 1 bis 3, dadurch gekennzeichnet, daß aus der Differenz zwischen Vorlauf und Rücklauftemperatur, multipliziert mit dem Umwälzmengenstrom der verbrauchte Energiemengenstrom als Produkt errechnet und hiernach eine Vorlauftemperatur bestimmt wird, die einem in einen Kennlinienblock eingepaßten Laststufenfeld gleichen Flächeninhalts zugeordnet ist und wobei eine Umwälzmengenstrom-Reguliereinrichtung nach Maßgabe der Meßwerte eines Mengenstromfühlers gesteuert wird.

**Claims**

1. Method for controlling the inlet temperature of the working agent of a system for thermal energy transfer, in particular for the temperature control of the air in a closed room, by determining the energy rate of flow [($t_v$ - $t_R$) • m] consumed in the working agent circuit, $t_v$ being the inlet temperature, $t_R$ the return temperature and m the measured circulating mass rate of flow, characterised in that a load increment field (L') corresponding to the determined energy rate of flow is assigned to an equal-area load increment field (L) inside a system-specific three-dimensional characteristic block (K) and the desired inlet temperature is picked off from the latter, the dimensions of the three-dimensional characteristic block (K) being determined by a) the inlet temperature and the return temperature, b) the circulating mass rate of flow of the working agent of the system and c) the outside temperature.

2. Method according to Claim 1, characterised in that the difference between the inlet temperature and the return temperature for an unchanged circulating mass rate of flow is used to calculate the energy rate of flow consumed and then the inlet temperature assigned to the latter is determined.

3. Method according to Claim 1 or 2, characterised in that the difference between the inlet temperature and the return temperature multiplied by the circulating mass rate of flow reduced to a specific partial amount is used to calculate the energy rate of flow consumed and then this is taken as a basis to determine the inlet temperature which is assigned to the load increment field, fitted into the characteristic block, having the same area and a circulating mass rate of flow reduced to the same extent.

4. Method according to one of Claims 1 to 3, characterised in that the energy rate of flow consumed is calculated for each regulating stage of the circulating mass rate of flow as the product of the difference between the inlet and return temperatures multiplied by the circulating mass rate of flow and then the assigned inlet temperature is determined and during the transition from one regulating stage of the circulating mass rate of flow to the other the calculated product is divided by the circulating mass rate of flow of the next regulating stage of the circulating mass rate of flow and then the assigned inlet temperature is determined and the new regulating stage of the circulating mass rate of flow is connected.

5. Method according to one or more of Claims 1 to 3, characterised in that the difference between the inlet temperature and the return temperature multiplied by the circulating mass rate of flow is used to calculate the energy rate of flow consumed as the product and then an inlet temperature is determined which is assigned to a load increment field, fitted into the characteristic block, having the same area, a regulating device for the circulating mass rate of flow being controlled in accordance with the measured values of a rate of flow sensor.

**Revendications**

1. Procédé pour commander la température d'aller du fluide de travail d'une installation pour le transfert d'énergie thermique, en particulier pour tempérer l'air dans un espace fermé, en déterminant le débit d'énergie $[(t_v - t_R).m]$ consommé dans le circuit du fluide de travail, où $t_v$ est la température d'aller, $t_R$ la température de retour et m le débit de circulation mesuré, caractérisé en ce que l'on associe un champ d'étage de charge (L') correspondant au débit d'énergie déterminé à un champ d'étage de charge de même étendue (L) à l'intérieur d'un bloc de caractéristiques (K) à trois dimensions, spécifique de l'installation, et en ce que l'on en déduit la température d'aller recherchée, les dimensions du bloc de caractéristiques tridimensionnel (K) étant fixées par a) la température d'aller et la température de retour, b) le débit de circulation du fluide de travail de l'installation et c) la température extérieure.

2. Procédé suivant la revendication 1, caractérisé en ce qu'à partir de la différence entre la température d'aller et la température de retour, pour un débit de circulation demeurant constant, on calcule le débit d'énergie consommé et on en déduit la température d'aller qui lui est associée.

3. Procédé suivant la revendication 1 ou 2, caractérisé en ce qu'à partir de la différence entre la température d'aller et la température de retour, multipliée par le débit de circulation réduit à une fraction déterminée, on calcule le débit d'énergie consommé et on en déduit la température d'aller qui est associée au champ d'étage de charge de même superficie inséré dans le bloc de caractéristiques avec un débit de circulation réduit dans une égale mesure.

4. Procédé suivant l'une ou l'autre des revendications 1 à 3, caractérisé en ce que pour chaque degré de réglage du débit de circulation, on calcule le débit d'énergie consommé en faisant le produit de la différence entre la température d'aller et la température de retour multipliée par le débit de circulation et on en déduit la température d'aller correspondante et, lors du passage d'un degré de réglage du débit de circulation à un autre, le produit calculé est divisé par le débit de circulation du prochain degré de réglage du débit de circulation, on en déduit la température d'aller correspondante et on engage le nouveau degré de réglage du débit de circulation.

5. Procédé suivant une ou plusieurs des revendications 1 à 3, caractérisé en ce qu'à partir du produit de la différence entre la température d'aller et la température de retour, multipliée par le débit de circulation, on calcule le débit d'énergie consommé et on en déduit une température d'aller qui est associée à un champ d'étage de charge de même superficie inséré dans un bloc de caractéristiques, et on commande un dispositif de régulation du débit de circulation en fonction des valeurs mesurées par un capteur de débit.

Fig. 1

Fig. 2

*Fig. 3*

Fig. 4

Fig. 5

EP 0 282 886 B1

Fig. 6

*Fig. 7*

*Fig. 8*